(19) Europäisches Patentamt
European Patent Office
Office européen des brevets

(11) Veröffentlichungsnummer: **0 222 211**
**B1**

(12) **EUROPÄISCHE PATENTSCHRIFT**

(45) Veröffentlichungstag der Patentschrift: **10.05.89**

(51) Int. Cl.⁴: **C 07 F 9/40**

(21) Anmeldenummer: **86114486.3**

(22) Anmeldetag: **18.10.86**

(54) **Verfahren zur Herstellung von N-Methylphosphonsäurediestern von Acryl- bzw. Methacrylsäureamiden aus Methyloläthern.**

(30) Priorität: **13.11.85 DE 3540217**

(43) Veröffentlichungstag der Anmeldung: **20.05.87 Patentblatt 87/21**

(45) Bekanntmachung des Hinweises auf die Patenterteilung: **10.05.89 Patentblatt 89/19**

(84) Benannte Vertragsstaaten: **BE DE FR GB NL**

(56) Entgegenhaltungen:
**DE-A-2 215 434**
**DE-A-2 217 746**

**TETRAHEDRON LETTERS, Band 22, Nr. 34, 1981, Seiten 3249-3252, Pergamon Press Ltd, GB; T. SHONO et al.: "A new carbon-phosphorous bond forming reaction and synthesis of aminoalkylphosphonic acid derivatives"**

(73) Patentinhaber: **Röhm GmbH, Kirschenallee Postfach 4242, D-6100 Darmstadt 1 (DE)**

(72) Erfinder: **Langerbeins, Klaus, Dr., Bahnstrasse 31-33, D-6070 Langen (DE)**
Erfinder: **Ude, Werner, Dr., Birngartenweg 115, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1989

**Beschreibung**

Die Erfindung betrifft ein Verfahren zur Herstellung von polymerisierbaren Phosphonsäurediestern durch Umsetzung der N-Methylolderivate von Acryl- und Methacrylsäureamiden mit tertiären Phosphiten. Diese Monomeren geben als solche oder nach ihrer Hydrolyse zu Säuren oder Salzen, damit hergestellten Polymerisaten, z. B. Kunststoffen oder Textilhilfsmitteln, verbesserte Eigenschaften, beispielsweise verbesserten Flammschutz.

**Stand der Technik**

Zur Herstellung von Verbindungen der allgemeinen Formel I

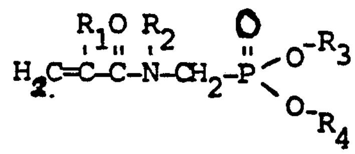

in der
$R_1$ Wasserstoff oder Methyl,
$R_2$ Wasserstoff oder $C_1$-$C_4$-Alkyl, ggfs. substituiert, bzw. $C_3$-$C_4$ Alkenylrest und
$R_3$ und $R_4$ gleiche oder verschiedene Reste wie Phenyl oder ggfs. substituierte Alkylgruppen mut 1 bis 4 C-Atomen, oder Alkylenreste, die mit den Sauerstoffatomen und dem Phosphoratom fünf- bis siebengliedrige Ringe bilden,
bedeuten, wurden schon verschiedene Verfahrensvarianten beschrieben.
Die bekannten Verfahren gehen von Acryl- und Methacrylsäureamidderivaten der Formel II

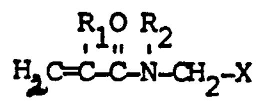

aus, in denen
$R_1$ und $R_2$ die oben angegebenen Bedeutungen haben und
X für eine Dimethylamino- oder Diäthylaminogruppe oder den Acetoxy- oder Propionyloxy- Rest oder ein Halogenatom oder eine Hydroxylruppe steht, und die mit tertiären Phosphiten, auch als Phosphorigsäuretriester bekannt, insbesondere mit aliphatischen Phosphiten der Formel III

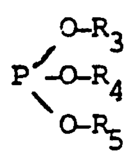

in denen
$R_3$ und $R_4$ sowie $R_5$ die oben angegebenen gleichen oder verschiedenen Phenyl- oder Alkylreste bedeuten oder $R_3$ und $R_4$ Alkylenreste sind, die mit den Sauerstoffatomen und dem Phosphoratom fünf- bis siebengliedrige Ringe bilden, umgesetzt werden.

So beschreibt die DE-A-2 215 434 die Umsetzung von tertiären Phosphiten mit Verbindungen der Formel II, in denen X = OH ist, bei Temperaturen von etwa 100 bis 120°C zu einem Rohprodukt, und die DE-A-2 217 746 beschreibt Umsetzungen von Acryl- und Methacrylsäureamidderivaten der Formel II mit den verschiedenen schon oben angegebenen Bedeutungen für X mit Phosphiten der Formel III.

Die polymerisierbaren Phosphonsäureester der Formel I sind relativ hoch siedende Substanzen. So wird z. B. in der DE-A-2 217 746 N-Methacrylamido-methyl-dimethylphosphonat als Flüssigkeit vom Siedepunkt 170 - 180 Grad C/160 - 200 Pa (1,2 - 1,5 Torr) in einer Ausbeute von 76 % d.Th. aus N-Acetoxymethyl-methacrylsäureamid erhalten. Ein entsprechendes aus N-Hydroxymethylmethacrylamid erhaltenes, nicht destilliertes Rohprodukt, soll gemäß gaschromatographischer Analyse zu 78 % aus dieser Verbindung bestehen.

Versuche, Acryl- und Methacrylamido-methyl-phosphonate in hohen Ausbeuten und hohen Reinheiten herzustellen zeigten, daß dies nach dem Stand der Technik nicht möglich ist. Unter den bekannten Reaktionsbedingungen entstehen bei den Umsetzungen mit N-Hydroxymethylverbindungen von Acryl- oder Methacrylsäureamid u.a. größere Mengen an Methylenbisamiden der Acryl- oder Tethacrylsäure, die, wenn sie nicht durch aufwendige und verlustreiche Reinigungen entfernt werden, bei der Herstellung von Polymerisaten als unerwünschte Vernetzungsmittel wirken. Hinweise auf eine ungenügende Reinheit der Umsetzungsprodukte nach dem Stand der Technik sind auch der DE-A-2 538 282 zu entnehmen, nach der die Umsetzungsprodukte z. B. nach DE-A-2 217 746 Gemische von monomeren und oligomeren Phosphonaten sind.

Ausgangsverbindungen der Formel II, in denen X, wie in der DE-A-2 217 746 beschrieben, eine Acyloxy-, wie Acetoxy- oder Propionyloxygruppe ist, sind, wie aus Makromolekulare Chem. 57 (1962) 27 hervorgeht, durch Veresterung der Methylolverbindungen mit den relativ teuren Carbonsäureanhydriden herstellbar. Die dabei erzielbaren Ausbeuten, z. B. an Methacrylamidmethylenacetat mit 67 % d.Th., sind relativ niedrig.

Von Shono et al. ist aus Tetrahedron Letters, Band 22, Nr. 34, 1981, Seiten 3249 - 2352 bekannt, α-Methoxyurethane mit Trialkyl- und Triphenylphosphiten, in Gegenwart von Lewis-Säuren als Katalysatoren, zu Aminoalkylphosphensäurederivaten umzusetzen. Die Reaktion verläuft besonders gut in Gegenwart größerer als katalytischen, d. h. in äquivalenten Mengen von Lewis-Säuren und bei Temperaturen von -20 Grad C bis Raumtemperatur.

Wie weiter gezeigt wurde, läßt sich unter diesen Bedingungen auch ein analoges Acetamidderivat, nämlich das N-Acetyl-α-methoxypyrrolidin mit ähnlichen Ergebnissen zu dem entsprechenden Phosphonsäurederivat umsetzen.

## Aufgabe und Lösung

Es bestand daher die Aufgabe ein verbessertes Syntheseverfahren solcher für die Herstellung technisch interessanter Polymerisate notwendiger polymerisierbarer Phosphonsäureester bzw. daraus hergestellter Derivate zu entwickeln, wodurch insbesondere die Ausbeute der Monomeren erhöht und durch weitgehende Ausschaltung von Nebenreaktionen die Reinheit der Umsetzungsprodukte für ihre direkte Verwendbarkeit als Rohprodukte verbessert wird. Diese Aufgabe konnte nach dem Verfahren gemäß den Ansprüchen gelöst werden.

Das erfindungsgemäße Verfahren betrifft demnach die Herstellung von N-Methylenphosphonsäurediestern von Acryl- bzw. Methacrylamiden der Formel I durch Kondensation von Acryl- und Methacrylsäureamidderivaten der Formel II, in denen X eine Alkoxy- bzw. Alkenyloxygruppe mit 1 - 10 C-Atomen ist, mit tertiären Phosphiten der Formel III. Überraschenderweise verliefen mit den aus der oben genannten Makromolekulare Chem. bekannten, leicht zugänglichen und stabilen N-Methylolalkyl- bzw. -alkenyläthern von Acryl- bzw. Methacrylamid die Umsetzungen mit tertiären Phosphiten zu wesentlich höheren Ausbeuten an entsprechenden polymerisierbaren Phosphonsäurediestern als mit den bisher bekannten $-CH_2-X$-Ausgangsverbindungen. Es wurde weiter gefunden, daß die Umsetzungen der N-Methylolalk(en)yläther der ungesättigten Säureamide mit den tertiären Phosphiten vorteilhaft in Gegenwart von Lewis-Säuren durchgeführt werden, wodurch die gewünschten Reaktionen beschleunigt ablaufen und Nebenreaktionen weitgehend unterdrückt werden.

## Ausführung der Erfindung

Die erfindungsgemäße Umsetzung zu Verbindungen der Formel I wird nach folgender Reaktionsgleichung:

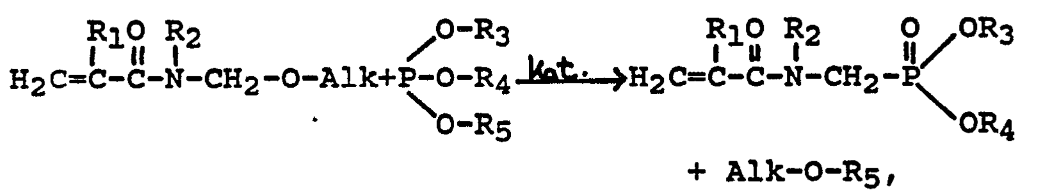


worin

$R_1$, $R_2$, $R_3$, $R_4$ und $R_5$ die oben genannten Bedeutungen haben und

Alk für Alkyl- bzw. Alkylgruppen mit 1 bis 8 C-Atomen steht, die gerade oder verzweigt oder cyclisch oder araliphatisch sein können, gegebenenfalls in Anwesenheit eines inerten Verdünnungs- bzw. Lösungsmittels bei Temperaturen von 30 bis 180 Grad C, vorzugsweise 60 bis 130 Grad C, in Gegenwart von katalytisch wirkenden Metallverbindungen durchgeführt, wobei die Reaktionsteilnehmer in stöchiometrischem Verhältnis, vorzugsweise aber mit Phosphitüberschuß zur Reaktion eingesetzt werden und der bei der Reaktion gebildete Äther gegebenenfalls schon während der Umsetzung abdestilliert wird.

Als Acryl- bzw. Methacrylsäureamidmethyloläther für die Herstellung der polymerisierbaren Amidphosphonsäureester seien beispielsweise genannt:

N-Methoxymethyl-acrylsäureamid, N-Methoxymethyl-methacrylsäureamid, N-Äthoxymethylmethacrylsäureamid, N-Isobutoxymethyl-acrylsäureamid, N-Isobutoxymethyl-methacrylsäureamid, N-Methoxymethyl-N-methyl-methacrylsäureamid, N-Isobutoxymethyl-N-methyl-methacrylsäureamid, N-Äthoxymethyl-N-äthyl-acrylsäureamid, N-Allyloxymethyl-methacrylsäureamid, N-Cyclohexyloxymethylmethacrylsäureamid. Vorzugsweise werden die Verbindungen N-Methoxymethyl-, N-Äthoxymethyl- und N-Isobutoxymethyl der Acrylsäure- und Methacrylsäureamide eingesetzt, die alle in hoher Reinheit technisch herstellbar sind.

Als tertiäre Phosphite kommen neben Triphenylphosphit insbesondere die aliphatischen tertiären Phosphite als Reaktionspartner in Frage. Beispielsweise seien folgende genannt: Trimethylphosphit, Träthylphosphit, Triisopropylphosphit, Tri-n-butyl-phosphit, Tris-(2-chloräthyl)phosphit, Tris-(2-bromäthyl)phosphit, 2-Methoxy-1,3-dioxaphospholan, 2-Äthoxy-4-methyl-1,3-dioxa-phospholan.

Die genannten aliphatischen Phosphite sind Flüssigkeiten und auch Triphenylphosphit mit einem Schmelzpunkt von 25°C liegt bei den Reaktionstemperaturen als Flüssigkeit vor. Sie werden zur ungesättigten Amidmethylolätherkomponente mindestens in äquimolar Menge, vorteilhaft in einem Überschuß dazu, beispielsweise in der 2 bis 8 fachen äquimolaren Menge, eingesetzt und können so noch als Reaktionsmedium dienen. Nach Reaktionsende wird dann der Überschuß, gegebenenfalls bei vermindertem Druck abdestilliert. Wird die Umsetzung mit einem inerten Lösungs- bzw. Verdünnungsmittel, das in dem angewendeten Reaktionstemperaturbereich nicht flüchtig ist, durchgeführt, kann der Überschuß an tertiärem Phosphit als Reaktionskomponente relativ gering gehalten, oder die Reaktionspartner auch im molaren Verhältnis 1 : 1 eingesetzt werden. Als Reaktionsmedien eignen sich z. B. Methylenchlorid, 1,2-Dichloräthan, Tetrachloräthan, Fluorchlorkohlenwasserstoffe oder auch Nitrobenzol.

Bei der Reaktion wird pro Mol gebildeten Reaktionsprodukt ein Mol Dialkyl- bzw. Phenylalkyläther, entsprechend den verwendeten Ausgangskomponenten, gebildet, der während der Umsetzung gegebenenfalls schon mit überschüssigem Phosphit und Lösungsmittel abdestilliert wird. Nach der Umsetzung werden durch Destillation unter vermindertem Druck alle flüchtigen Substanzen, wie überschüssiges Phosphit, Äther und gegebenenfalls Lösungsmittel entfernt, wonach das zurückbleibende Verfahrensprodukt ohne besondere Reinigung weiterverwendet werden kann.

Wie weiter gefunden wurde, läßt sich die neue Reaktion durch Zusatz von Lewis-Säuren beschleunigen und die Ausbeute verbessern. Erfindungsgemäß einzusetzende Katalysatoren mit Lewis-Säure-Charakter (zu diesem Begriff: Römpps Chemie Lexikon, 8. Auflage, S. 2360) sind:

die als Friedel-Crafts-Katalysatoren bekannten anorganischen Metallverbindungen, meist Halogenide, so z. B. Al $Cl_3$, Al $Br_3$, $BF_3$, $ZrCl_4$, $ZnCl_2$, Ti $Cl_4$, Be $Cl_2$, Bi $Cl_3$, As $F_3$, Fe $Cl_3$, Sb $Cl_5$. Cu $Cl_2$, Sn $Cl_4$ (dazu Ullmanns Encyclopädie der technischen Chemie, 4. Auflage, Band 7, S. 101 und Band 14, S. 675),

und Metallverbindungen des Titans, Zirkoniums, Hafniums, Zinns, Zinks, Aluminiums, Vanadiums mit organischen Liganden, wie Alkoxy-, Aryloxy-, Acyloxy- oder auch Alkyl- bzw. Arylgruppen wobei die Alkyl-, Acyl- und Arylreste 1 bis 10 C-Atome besitzen, so z. B. Tetraisopropyltitanat, Tetra-n-butyltitanat, Dibutylzinnoxid, Zirkon-IV-alkoholate, insbesondere mit Propanol und Butanol. Als Acyloxyderivate der Metalle können solche der Essigsäure, z. B. Zinkacetat, aber auch solche der Acryl- und/oder Methacrylsäure eingesetzt werden. Weiter sind brauchbare Katalysatoren mit organischen Resten Metallacetylacetonate, beispielsweise die des Zirkons und Titans. Solche Lewis-Säuren werden vielfach in der synthetischen Chemie als Veresterungskatalysatoren eingesetzt (Ullmanns Encyclopädie der technischen Chemie, 4. Auflage, Band 11, S. 91 und Firmenschriften von Dynamit Nobel, Chemikalien, "Titansäureester" und "Zwischenprodukte und Katalysatoren").

Auch Kombinationen von zwei oder mehr Katalysatoren der genannten Gruppe, wie z. B. Al $Cl_3$ und Zirkon-IV-äthylat oder Ti-IV-Verbindungen mit Dialkylzinnoxiden, z. B. Tetraisopropyltitanat und Dibutylzinnoxid, sind in verschiedenen Molverhältnissen vorteilhaft einsetzbar.

Die erfindungsgemäß für die Umsetzung von Acryl- und Methacrylamidmethylalkyläther-Verbindungen mit tertiären Phosphiten als Katalysatoren zu vewendenden Metallverbindungen, kommen in katalytischen Mengen zur Anwendung, beispielsweise in Anteilen von 0.01 bis 10 Mol.-%, vorzugsweise 0.1 bis 5 Mol.-% bezogen auf den herzustellenden Phosphonsäureester.

Zur Vermeidung von Polymerisationsverlusten ist es zweckmäßig die Umsetzung und die Aufarbeitung des Reaktionsgemisches in Gegenwart von Polymerisationsinhibitoren, wie z. B. Hydrochinonmonomethyläther, durchzuführen.

**Beispiel 1**

10 Mol N-Methoxymethylmethacrylamid (98 %-ig), 15 Mol Trimethylphosphit und 1 g Hydrochinonmonomethylether werden in einem Dreihalsrundkolben mit Rückflußkühler, Preßlufteinleitung, Thermometer, Kolonnenkopf und mech. Rührwerk auf 110°C erhitzt. Nach Zugabe von 27 ml Isopropyltitanat wird das Reaktionsgemisch 16 Stunden bei 110°C weiter am Rückfluß erhitzt. Dann wird das überschüssige Trimethylphosphit im Ölpumpenvakuum abdestilliert. Die verbleibenden 1819 g N-Methylphosphonsäuredimethylestermethacrylamid haben lt. $^{1}H$- und $^{31}P$-NMR-Spektrum eine Reinheit von 90 %, was dann einer Ausbeute von 81 % d.Th. entspricht.

**Beispiel 2**

0,33 Mol N-Methoxymethylmethacrylamid (98 %-ig), 0,5 Mol Trimethylphosphit und 0,1 g Hydrochinonmonomethylether werden in einem Dreihalsrundkolben mit Rückflußkühler, Preßlufteinleitung, Thermometer, Kolonnenkopf und mech. Rührwerk auf 110°C erhitzt. Nach Zugabe von 1 g Dibutylzinnoxid wird das Reaktionsgemisch 10,5 Stunden bei 110°C weiter erhitzt. Nach Abdestillation des überschüssigen Trimethylphosphits liegt das gewünschte Produkt in einer Reinheit von 89 % vor ($^1H$- und $^{31}P$-NMR-Spektrum).

**Beispiel 3**

Darstellung von Methacrylamidomethanphosphonsäure

2,3 Mol N-Methylphosphonsäuredimethylestermethacrylamid (90 %-ig), 5,6 Mol Wasser, 8,8 g 32 %-ige Salzsäure und 0,5 g Hydrochinonmonomethylether werden in einem Rundkolben mit Preßlufteinleitung, Destillationsaufsatz, Thermometer und mech. Rührwerk 2 Stunden auf 70°C erhitzt. Das bei der Reaktion entstehende Methanol wird aus dem leicht viskosen Reaktionsgemisch innerhalb von 2 Stunden bei Wasserstrahlvakuum abdestilliert (70°C Badtemperatur).

Das gewünschte Produkt liegt in einer Reinheit von 92 % vor ($^1H$ und $^{31}P$-NMR-Spektrum). Die Ausbeute beträgt 434 g (97 % d.Th.).

**Patentansprüche**

1. Verfahren zur Herstellung von N-Methylphosphonsäurediestern von Acryl- bzw. Methacrylsäureamiden der Formel I

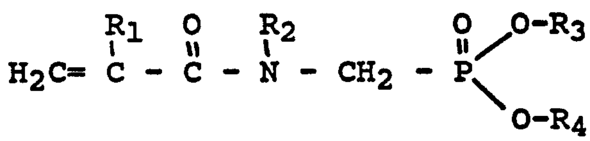

I

in der

$R_1$ Wasserstoff oder Methyl

$R_2$ Wasserstoff oder einen gegebenenfalls substituierten $C_1$-$C_4$-Alkylrest oder einen $C_3$-$C_4$-Alkenylrest,

$R_3$ und $R_4$ gleiche oder verschiedene Reste, wie phenyl oder gegebenenfalls substituierte Alkylgruppen mit 1 bis 4 C-atomen oder Alkylenreste, die mit den Sauerstoffatomen und dem Phosphoratom fünf- bis siebengliedrige Ringe bilden

bedeuten durch Umsetzung eines Methylamid-Derivates der Acryl- bzw. Methacrylsäure der Formel II

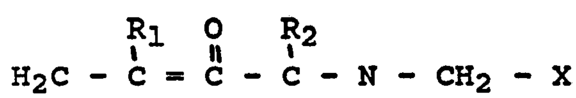

II

worin

$R_1$ und $R_2$ die oben angegebenen Bedeutungen haben mit einem Phosphit der Formel III

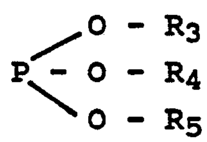

III

worin

$R_3$ und $R_4$ und wie diese $R_5$ die oben angegebenen gleichen oder verschiedenen Reste, wie Phenyl- oder Alkylgruppen bedeuten oder $R_3$ und $R_4$ Alkylenreste sind, die mit den Sauerstoffatomen und dem Phosphoratom fünf- bis siebengliedrige Ringe bilden,

dadurch gekennzeichnet,

daß die Umsetzung mit Verbindungen der Formel II, in denen X eine Alkoxy- bzw. Alkyloxygruppe mit 1 bis 10 C-atomen ist, und in Gegenwart katalytischer Mengen von Lewis-Säuren durchgeführt wird.

2. Verfahren gemäß dem Anspruch 1, dadurch gekennzeichnet, daß die Lewis-Säuren Friedel-Crafts-Katalysatoren sind.

3. Verfahren gemäß dem Anspruch 1, dadurch gekennzeichnet, daß die Lewis-Säuren Metallverbindungen

mit organischen Liganden sind.

4. Verfahren gemäß den Ansprüchen 1 und 3, dadurch gekennzeichnet, daß die Metallverbindungen mit organischen Liganden, Verbindungen des Titans, Zirkoniums, Hafniums, Zinns, Zinks, Aluminiums und Vanadiums mit den organischen Liganden Alkoxy, Aryloxy, Acyloxy und Alkyl bzw. Aryl sind, wobei die Alkyl-, Acyl-, und Arylreste 1 bis 10 C-Atome besitzten.

5. Verfahren gemäß den Ansprüchen 1 bis 4, dadurch gekennzeichnet, daß einzelne Metallverbindungen oder Gemische verschiedener Metallverbindungen als Katalysatoren eingesetzt werden.

6. Verfahren gemäß den Ansprüchen 1 bis 5, dadurch gekennzeichnet, daß die Katalysatoren in Mengen von 0,01 bis 10 Mol.-%, vorzugsweise 0,1 bis 5 Mol.-%, bezogen auf den herzustellenden Phosphonsäureester eingesetzt werden.

## Claims

1. Process for preparing N-methylphosphonic acid diesters of acrylic or methacrylic acid amides of formula I

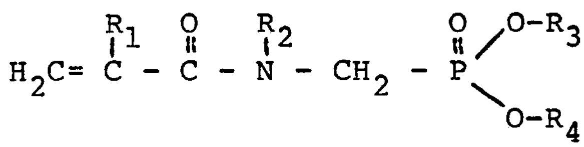

I

wherein

$R_1$ represents hydrogen or methyl

$R_2$ represents hydrogen or an optionally substituted $C_{1-4}$ alkyl group or a $C_{3-4}$-alkenyl group,

$R_3$ and $R_4$ represent identical or different groups, such as phenyl or optionally substituted alkyl group having 1 to 4 carbon atoms or alkylene groups which form five to seven-membered rings with the oxygen atoms and the phosphorus atom,

by reacting a methylamide derivative of acrylic or methacrylic acid of formula II

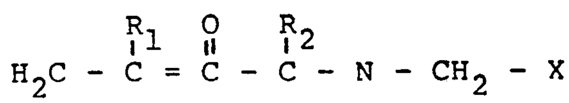

II

wherein

$R_1$ and $R_2$ are defined as hereinbefore, with a phosphite of formula III

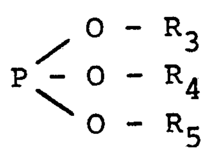

III

wherein $R_3$ and $R_4$ and, like them, $R_5$ represent the above-mentioned identical or different groups such as phenyl or alkyl groups or $R_3$ and $R_4$ are alkylene groups which form five- to seven-membered rings with the oxygen atoms and the phosphorus atom, characterised in that the reaction is carried out with compounds of formula II wherein X is an alkoxy or alkyloxy group with 1 to 10 carbon atoms and in the presence of catalytic quantities of Lewis acids.

2. Process as claimed in claim 1, characterised in that the Lewis acids are Friedel-Crafts catalysts.

3. Process as claimed in claim 1, characterised in that the Lewis acids are metal compounds with organic ligands.

4. Process as claimed in claims 1 and 3, characterised in that the metal compounds with organic ligands are compounds of titanium, zirconium, hafnium, tin, zinc, aluminium and vanadium with the organic ligands alkoxy, acyloxy, acryloxy and alkyl or aryl, the alkyl, acyl and aryl groups containing 1 to 10 carbon atoms.

5. Process as claimed in claims 1 to 4, characterised in that individual metal compounds or mixtures of different metal compounds are used as catalysts.

6. Process as claimed in claims 1 to 5, characterised in that the catalysts are used in amounts of from 0.01 to 10 mol-%, preferably 0.1 to 5 mol-%, based on the phosphonic acid ester which is to be prepared.

## Revendications

1. Procédé de préparition de diesters de N-(phosphonatométhyl)acryl- ou méthacrylamides de formule I

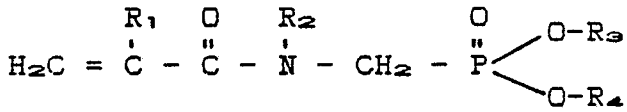

I

dans laquelle

$R_1$ représente un atome d'hydrogène ou un radical méthyle,

$R_2$ représente un atome d'hydrogène, un radical alkyle en $C_1$-$C_4$ éventuellement substitué ou un radical alcényle en $C_3$-$C_4$, et

$R_3$ et $R_4$ représentent des radicaux identiques ou différents tels que des groupements phényle, des groupements alkyle à 1 - 4 atomes de carbone éventuellement substitués ou des radicaux alkylène qui forment des noyaux pentagonaux à heptagonaux avec les atomes d'oxygène et l'atome de phosphore,

par réaction d'un dérivé méthylamide de l'acide acrylique ou méthacrylique de formule II

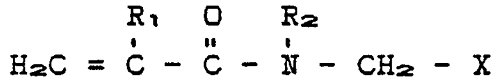

II

dans laquelle

$R_1$ et $R_2$ ont les significations données précédemment, avec un phosphite de formule III

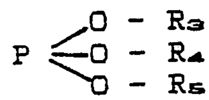

III

dans laquelle

$R_3$ et $R_4$, ainsi que $R_5$, représentent les radicaux phényle ou alkyle identiques ou différents indiqués précédemment, ou $R_3$ et $R_4$ sont des radicaux alkylène qui forment des noyaux penta- à heptagonaux avec les atomes d'oxygène et l'atome de phosphore, caractérisé en ce que la réaction est effectuée avec des composés de formule II dans lesquels

X est un groupement alcoxy ou alkyloxy à 1 - 10 atomes de carbone, et en présence de quantités catalytiques d'acides de Lewis.

2. Procédé selon la revendication 1, caractérisé en ce que les acides de Lewis sont des catalyseurs de Friedel-Crafts.

3. Procédé selon la revendication 1, caractérisé en ce que les acides de Lewis sont des composés métalliques avec des ligands organiques.

4. Procédé selon la revendication 1 ou 3, caractérisé en ce que les composés métalliques avec des ligands organiques sont des composés du titane, du zirconium, du hafnium, de l'étain, du zinc, de l'aluminium ou du vanadium avec les ligands organiques alcoxy, aryloxy, acyloxy et alkyle ou aryle, les radicaux alkyle, acyle et aryle comportant de 1 à 10 atomes de carbone.

5. Procédé selon l'une quelconque des revendications 1 à 4, caractérisé en ce que des composés métalliques individuels ou des mélanges de différents composés métalliques sont utilisés comme catalyseurs.

6. Procédé selon l'une quelconque des revendications 1 à 5, caractérisé en ce que les catalyseurs sont utilisés dans des proportions de 0,01 à 10 mol %, de préférence de 0,1 à 5 mol %, sur la base de l'ester d'acide phosphonique à préparer.